# EUROPÄISCHE PATENTSCHRIFT

(11) **EP 3 835 744 B1**
(45) Veröffentlichungstag und Bekanntmachung des Hinweises auf die Patenterteilung: **12.03.2025**
(21) Anmeldenummer: 20213100.9
(22) Anmeldetag: 10.12.2020
(51) Int. Cl.: G01L 3/14, G01B 7/00, G01D 5/14

(54) **VORRICHTUNG UND VERFAHREN ZUR DREHMOMENTMESSUNG IN EINEM STELLANTRIEB**
DEVICE AND METHOD FOR TORQUE MEASUREMENT IN AN ACTUATOR
DISPOSITIF ET PROCÉDÉ DE MESURE DE COUPLE DANS UN SERVOMOTEUR

(30) Priorität: 13.12.2019 DE 102019134361
(43) Veröffentlichungstag der Anmeldung: 16.06.2021
(73) Patentinhaber: AUMA Riester GmbH & Co. KG, 79379 Müllheim (DE)
(72) Erfinder: Hofmann, Benjamin, 79423 Heitersheim (DE)
(74) Vertreter: Mertzlufft-Paufler, Cornelius

(56) Entgegenhaltungen:
- EP-A1- 3 012 181
- EP-A2- 0 831 021
- DE-A1- 102016 122 845
- DE-A1- 102017 126 906
- US-A- 4 853 629
- US-A1- 2013 238 257
- US-A1- 2017 184 466

## Beschreibung

Die Erfindung betrifft ein Verfahren und eine Vorrichtung zur Bestimmung eines Drehmoments eines Getriebes, insbesondere an einem Stellantrieb und einen Stellantrieb.

Stellantriebe werden beispielsweise zur Ansteuerung von Armaturen oder Ventilen verwendet. Dabei kann ein hohes Drehmoment notwendig sein. Andererseits kann durch ein übermäßiges Drehmoment die Armatur und/oder der Stellantrieb beschädigt werden. Es ist daher wünschenswert, das Drehmoment jederzeit während dem Betrieb zu messen, um schnell auf eventuell auftretende Drehmomentspitzen oder Überbelastungen reagieren zu können.

Die DE 10 2017 126 906 A1 beschreibt einen Achsrotations-Drehmomentsensor zur Erfassung des Drehmoments einer rotierenden Achse. Die Drehmomenterfassung erfolgt durch Dehnmessstreifen, die an streifenförmigen Balken angeordnet sind, wobei die Balken mit dem Hohlrad eines Planetengetriebes verbunden sind.

Die US 3 012 181 A1 beschreibt ein Mittelmotor Antriebssystem für Fahrräder mit einem Drehmomentsensor.

Die EP 0 831 021 A2 beschreibt eine Vorrichtung zum Schalten eines Fahrradgetriebes wobei ein optimaler Gang aufgrund einer Pedalkraft ermittelt wird.

Die US 2017/0184466 A1 beschreibt ein Drehmomentsensor basierend auf einem Planetengetriebe wobei ein Zwischenzahnrad zwischen einer Eingangswelle und einer Ausgangswelle angeordnet ist.

Mit dem Zwischenzahnrad ist wenigstens ein Federelement verbunden, an dem ein Dehnmessstreifen angeordnet ist.

Die US 2013/0238257 A1 beschreibt ein Gerät zur Bestimmung der Spannung in weichem Gewebe, wobei wenigstens zwei Kraftsensoren vorhanden sind, die eine gemeinsame Richtung besitzen, wobei eine Spannung aus den beiden gemessenen Kräften ermittelt wird.

Die DE 10 2016 122 845 A1 beschreibt eine Kraftmessdose zur Bestimmung einer radialen Kraft auf eine Kurbelwelle mit einer Aufnahmehülse zur Aufnahme eines Lagerrings und einem Befestigungsring zur Befestigung der Kraftmessdose in einem Getriebegehäuse. Axialstützbereiche sind an dem Befestigungsring zur axialen Abstützung des Außenrings des ersten Lagers vorgesehen. Weiterhin sind Messbereiche zur Aufnahme von radialen Kräften der Aufnahmehülse vorgesehen, die die Aufnahmehülse mit dem Befestigungsring verbinden. An mindestens zwei der Messbereiche sind Dehnungssensoren befestigt.

Aufgabe der Erfindung ist es eine Vorrichtung und ein Verfahren zur Drehmomentmessung an einem Getriebe zu verbessern.

Eine weitere Aufgabe besteht darin einem Stellantrieb zu verbessern.

Die erfindungsgemäßen Aufgaben wird durch ein Verfahren und Vorrichtungen gemäß den unabhängigen Ansprüchen gelöst.

Das erfindungsgemäße Verfahren ist dadurch gekennzeichnet, dass ein Grad der Verformung durch eine Abstandsmessung mit einem Hallsensor detektiert wird. Der Vorteil besteht dabei darin, dass die Abstandsmessung berührungslos erfolgt und Hallsensoren kostengünstig und einfach montierbar sind.

Erfindungsgemäß wird dabei der Grad der Verformung durch Bestimmung einer Relativposition des Hall-Sensors zu einem magnetisch aktiven Gegenstück detektiert. Das Biegeelement ist erfindungsgemäß als Zunge in der Plattenebene der Basisplatte ausgebildet und die Auslenkung der Zunge erfolgt in der Plattenebene.

Vorzugsweise ist das magnetisch aktive Gegenstück ein Permanentmagnet.

Ein alternatives Verfahren, bei dem das Biegeelement eine flächige Ausdehnung hat, ist vorzugsweise dadurch gekennzeichnet, dass ein Grad der Verformung in Richtung der flächigen Ausdehnung detektiert wird.

Der Vorteil dabei ist, dass eine Verformung quer zur flächigen Ausdehnung von der Messung entkoppelt ist und beispielsweise so zum Ausgleich von axialen Montagetoleranzen verwendet werden kann.

Erfindungsgemäß ist das Biegeelement als Zunge in einem plattenförmigen Träger ausgebildet.

In einer zweckmäßigen Ausführung ist eine erste Getriebestufe an dem Träger und eine zweite Getriebestufe an dem Biegeelement befestigt. Auf diese Weise wird das Biegeelement durch ein Drehmoment zwischen den beiden Getriebestufen ausgelenkt. Die Auslenkung kann durch den Hallsensor bestimmt werden, woraus auf das Drehmoment zurückgerechnet werden kann.

Die Erfindung umfasst eine Vorrichtung zur Bestimmung eines Drehmoments eines Getriebes, insbesondere eines Stellantriebs, dadurch gekennzeichnet, dass in einer Übertragungskette des Drehmoments ein elastisch verformbares Biegeelement angeordnet ist, welches sich in Abhängigkeit von dem Drehmoment verformt, und dass eine Sensoranordnung, mit welcher eine Verformung des Biegeelements detektierbar ist, eine als Ganzes montierbare bauliche Einheit bildet. Auf diese Weise ist eine einfache und kostengünstige Montage der Sensoranordnung möglich.

Erfindungsgemäß weist die Sensoranordnung einen Sensor und ein Gegenstück auf.

In einer Ausführung erfasst der Sensor, vorzugsweise berührungslos, eine relative Lage von Sensor und Gegenstück zur Erfassung eines Grads der Verformung des Biegeelements.

In einer vorteilhaften Ausführung weist die Vorrichtung wenigstens zwei Biegeelemente auf, die im Wesentlichen tangential zu einer Drehrichtung des Getriebes auslenkbar sind, wobei ein feststehendes Teil des Getriebes an den Biegeelementen befestigbar ist, und die Vorrichtung weist eine Sensoreinheit auf, die zur Bestimmung einer Auslenkung wenigstens eines der Biegeelemente ausgebildet ist.

Das Biegeelement ist zweckmäßigerweise so ausgebildet, dass es sich elastisch verformt. Je nach Material und je nach auftretenden Drehmomenten kann es daher vorteilhaft sein, wenn die Biegeelemente einseitig oder zweiseitig eingespannt sind. Auf diese Weise kann durch die Anordnung der Biegeelemente Einfluss auf die notwendige Biegekraft genommen werden.

In einer Ausführung weist die Vorrichtung eine Basisplatte mit einer, insbesondere kreisförmigen, Aussparung für eine Getriebewelle auf, wobei die Biegeelemente gleichmäßig um die Aussparung verteilt angeordnet sind. Eine solche Anordnung ist insbesondere bei der Anwendung von Planetengetrieben zweckmäßig, da hierbei die Abtriebs- und/oder Antriebswelle koaxial zum Gehäuse/Hohlrad angeordnet sind.

In einer vorteilhaften Ausführung weist die Vorrichtung die oder eine Basisplatte auf. Die Biegeelemente sind vorzugsweise als Zungen in der Plattenebene der Basisplatte ausgebildet und die Auslenkung der Biegeelemente erfolgt in der Plattenebene. Dies hat den Vorteil, dass die Auslenkung unabhängig von einer axialen Auslenkung der Biegeelemente ist und die Biegeelemente unter Umständen zum axialen Toleranzausgleich verwendet werden können.

Die Bestimmung der Auslenkung kann vorzugsweise auf kapazitiver, optischer, resistiver, piezoresistiver, piezoelektrischer oder magnetischer Wirkung beruhen. Die Abstandsmessung kann somit beispielsweise mittels Dehnmessstreifen oder Hallsensoren erfolgen.

In einer vorteilhaften Ausführung weist die Vorrichtung ein Mittel zur Berechnung eines Drehmoments aus der Auslenkung auf. Auf diese Weise kann direkt ein zu einem Drehmoment proportionaler Wert ausgegeben werden.

Alternativ und/oder zusätzlich kann die Vorrichtung mit einem Mittel zur Berechnung eines Drehmoments aus der Auslenkung verbindbar sein. Somit kann der Messwert auch anderweitig verwendet werden, beispielsweise für Steuer- und Regelzwecke oder auch zur Alarmierung anderer Anlagenkomponenten.

Eine besonders vorteilhafte erfindungsgemäße Vorrichtung weist wenigstens zwei Biegeelemente auf, die im Wesentlichen tangential zu einer Drehrichtung des Getriebes auslenkbar sind, wobei ein feststehendes Teil des Getriebes an den Biegeelementen befestigbar ist, und wobei die Vorrichtung eine Sensoreinheit aufweist, die zur Bestimmung einer Auslenkung eines Biegeelements ausgebildet ist. Die Sensoreinheit weist ein erstes Sensorelement und ein zweites Sensorelement auf, wobei das erste Sensorelement mit einem Biegeelement verbunden ist und das zweite Sensorelement mit einem feststehenden Bauteil verbunden ist und wobei die Sensoreinheit zur Bestimmung des Abstands zwischen dem ersten Sensorelement und dem zweiten Sensorelement ausgebildet ist. Auf diese Weise wirkt ein Drehmoment des Getriebes auf die Biegeelemente, so dass diese im Wesentlichen tangential zur Drehrichtung ausgelenkt werden.

Über die Auslenkung kann direkt das Drehmoment berechnet werden. Der Vorteil besteht nun darin, dass die Auslenkung durch eine einfache Abstandsmessung zwischen dem Biegeelement und dem feststehenden Teil bestimmt werden kann.

Erfindungsgemäß weist ein Sensorelement einen Permanentmagnet auf und das andere Sensorelement weist einen Hallsensor auf. Durch den Hallsensor kann auf einfache Weise der Abstand zum Permanentmagneten bestimmt werden. Die Abstandsmessung mit einem Hallsensor ist tolerant gegenüber axialen Verschiebungen zwischen dem Hallsensor und dem Permanentmagnet. Dadurch kann eine axiale Auslenkung der Biegeelemente zum Ausgleich von axialen Lage- oder Fertigungstoleranzen verwendet werden, ohne dass dadurch eine Drehmomentmessung beeinflusst wird.

In einer vorteilhaften Ausführung weist das erste Sensorelement den Permanentmagnet auf und das zweite Sensorelement weist den Hallsensor auf. Auf diese Weise ist der Hallsensor auf dem feststehenden Teil angeordnet, wodurch die Verkabelung vereinfacht sein kann.

In einer besonders vorteilhaften Ausführung sind die beiden Sensorelemente durch ein Federelement miteinander verbunden und/oder ineinander linear verschieblich geführt, so dass sie eine Sensoreinheit bilden. Der Vorteil dabei ist, dass die Montage vereinfacht ist, da eine Ausrichtung der beiden Sensorelemente zueinander entfallen kann. Dadurch kann sichergestellt werden, dass keine montagebedingte Abweichung der Messwerte erfolgt.

In einer vorteilhaften Ausführung sind die beiden Sensorelemente einteilig ausgebildet. Dabei kann insbesondere ein oder das Federelement ebenfalls einteilig ausgebildet sein. Dadurch wird eine Sensoreinheit gebildet, die einfach handhabbar und montierbar ist.

Die Erfindung umfasst auch einen Stellantrieb mit einem Planetengetriebe und einer erfindungsgemäßen Vorrichtung zur Bestimmung des Drehmoments, wobei das Hohlrad des Planetengetriebes mit den Biegeelementen der Vorrichtung drehfest verbunden ist.

Die Erfindung umfasst weiter einen Stellantrieb mit mehreren Getriebestufen aus Planetengetrieben, wobei eine erfindungsgemäße Vorrichtung zur Bestimmung des Drehmoments zwischen einem ersten Planetengetriebe und einem zweiten Planetengetriebe angeordnet ist und das erste Planetengetriebe mit den Biegeelementen und das zweite Planetengetriebe mit einem feststehenden Teil der Vorrichtung verbunden ist.

Die Erfindung ist nachfolgend anhand eines Ausführungsbeispiels mit Bezug auf die beiliegenden Zeichnungen näher erläutert.

Es zeigt:
- Fig. 1:: eine Schrägdarstellung einer Vorrichtung zur Bestimmung eines Drehmoments eines Getriebes mit einer Sensoreinheit mit einem Hallsensor und einem Permanentmagnet, und
- Fig. 2:: eine Blockdarstellung eines Stellantriebs mit einer Vorrichtung zur Bestimmung eines Drehmoments.

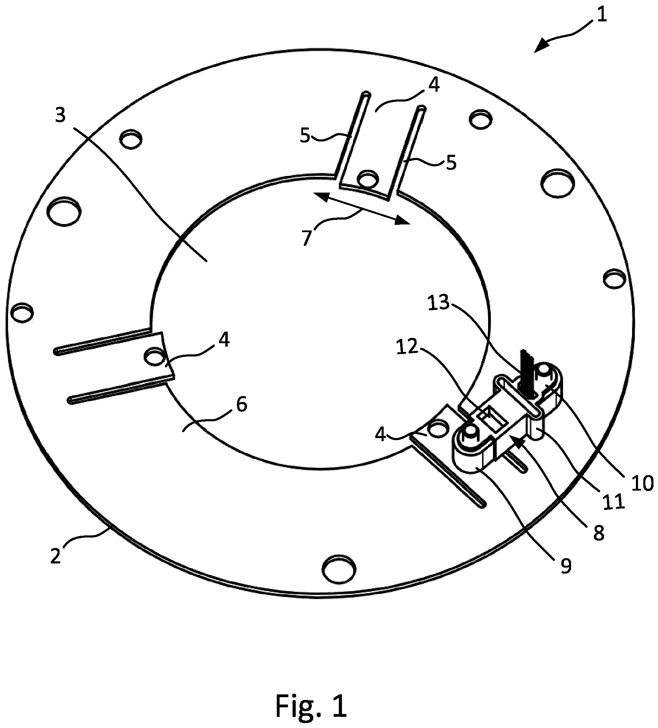

Die Fig. 1 zeigt eine Vorrichtung 1 zur Bestimmung eines Drehmoments an einem Getriebe, insbesondere eines Stellantriebs.

Diese Vorrichtung 1 weist eine Basisplatte 2 auf, die im Beispiel aus einem Metallblech hergestellt ist. Die Basisplatte 2 kann beispielsweise eine Dicke von 1 mm bis 3 mm aufweisen. Im Beispiel besitzt die Basisplatte 2 eine runde Außenkontur. Diese Außenkontur kann jedoch in Abhängigkeit der Form des Getriebes, an dem die Vorrichtung verwendet wird, angepasst werden. Die Außenkontur kann ohne Einschränkung der Funktion auch eine quadratische oder fünf-, sechs-, oder achteckige oder eine beliebige andere Form aufweisen.

Die Basisplatte 2 besitzt eine im Beispiel im Wesentlichen kreisförmige Öffnung 3, durch die beispielsweise eine Welle eines Getriebes geführt sein kann.

Die Basisplatte 2 weist im Beispiel drei Biegeelemente in Form von Biegezungen 4 auf. Diese Biegezungen 4 sind am Innenumfang der Öffnung 3 gleichmäßig verteilt angeordnet. Die Biegezungen 4 stehen radial nach innen in die Öffnung 3 über den Umfang der Öffnung 3 heraus. Die Biegezungen 4 sind dabei durch schmale Einschnitte 5 der Basisplatte 2 gebildet. Es können auch mehr oder weniger Biegezungen 4 vorhanden sein, beispielsweise vier oder zwei. Die Anzahl der Biegezungen 4 kann von dem zu messenden Drehmoment, von der Steifigkeit der Biegezungen und/oder vom Material der Biegezungen 4 abhängen.

Vorzugsweise wird ein feststehendes Teil eines Getriebes mit den Biegezungen 4 verbunden. Der feststehende Teil 6 der Basisplatte 2 kann mit einem feststehenden Teil eines Gehäuses 21 eines Stellantriebs 14 oder eines weiteren Getriebes verbunden sein.

Im Betrieb bewirkt ein Drehmoment zwischen dem Getriebe und dem feststehenden Teil 6 eine Auslenkung der Biegezungen 4 im Wesentlichen tangential zur Drehrichtung, wie im Bild durch den Pfeil 7 dargestellt ist. Das bedeutet, die Auslenkung findet im Wesentlichen innerhalb der Ebene der Basisplatte statt.

Ein weiterer Vorteil der Biegezungen 4 besteht darin, dass sie Toleranzen, beispielsweise eines Gehäuses 21, in axialer Richtung ausgleichen können. Dabei erfolgt eine Auslenkung der Biegezungen 4 im Wesentlichen senkrecht zur Ebene der Basisplatte 2. Dies hat keinen Einfluss auf die Auslenkung innerhalb der Ebene der Basisplatte 2 und somit auf die Drehmomentmessung.

Die Auslenkung der Biegezungen 4 wird durch eine Sensoreinheit 8 bestimmt. Diese Sensoreinheit 8 weist ein erstes Sensorelement 9 auf, dass mit einer Biegezunge 4 verbunden ist. Ein zweites Sensorelement 10 ist mit dem feststehenden Teil 6 der Basisplatte 2 verbunden. Die beiden Sensorelemente 9 und 10 sind durch ein Federelement 11 einstückig miteinander verbunden. Für die Funktion der Vorrichtung ist ein Rückstellmoment durch das Federelement 11 nicht notwendig. Dies hat jedoch den Vorteil, dass die Sensoreinheit 8 einstückig und als Ganzes einfach montierbar ist und beispielsweise keine Justierung notwendig ist. Alternativ können die beiden Sensorelemente 9 und 10 auch einzeln montiert sein oder ineinander verschieblich ausgebildet sein.

Im ersten Sensorelement 9 ist ein Permanentmagnet 12 angeordnet. Im zweiten Sensorelement 10 ist ein Hallsensor 13 als integrierter Schaltkreis angeordnet. Der Hallsensor 13 liegt innerhalb des Magnetfelds des Permanentmagneten 12. Durch eine Auslenkung der Biegezunge 4 innerhalb der Ebene der Basisplatte 2 verändert sich der Abstand zwischen den beiden Sensorelementen 9 und 10. Dadurch ändert sich das Magnetfeld im Hallsensor 13. Aus der sich dadurch ändernden Hall-Spannung kann direkt auf die Auslenkung zurück geschlossen werden.

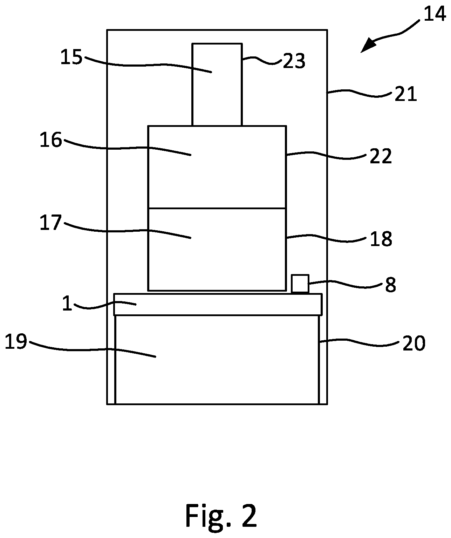

Die Fig. 2 zeigt eine schematische Blockdarstellung eines Stellantriebs 14. Der Stellantrieb 14 weist einen Elektromotor 15 als Antrieb auf. Die Welle des Elektromotors 15 ist mit einer Rücklaufsperre 16 verbunden, die verhindert, dass eine durch den Stellantrieb 14 angesteuerte Armatur durch innerhalb der Armatur strömendes Fluid bewegt wird. Das Gehäuse 22 der Rücklaufsperre 16 ist drehfest mit dem Gehäuse 23 des Elektromotors 15 verbunden.

Die Rücklaufsperre 16 ist abtriebseitig mit einem ersten Planetengetriebe 17 verbunden. Dabei ist das Gehäuse 22 der Rücklaufsperre 16 mit dem Hohlrad 18 des ersten Planetengetriebes 17 drehfest verbunden.

Das Hohlrad 18 des ersten Planetengetriebes 17 ist mit den Biegezungen 4 einer erfindungsgemäßen Vorrichtung 1 zum Bestimmen des Drehmoments drehfest verbunden. Die Vorrichtung 1 besitzt eine Sensoreinheit 8 zur Bestimmung der Auslenkung der Biegezungen 4. Diese Sensoreinheit 8 weist vorzugsweise einen Permanentmagneten und einen Hallsensor gemäß der Fig. 1 auf. Die Bestimmung der Auslenkung kann jedoch auch über kapazitive, resistive, piezoresistive oder optische Sensoren erfolgen.

Das erste Planetengetriebe 17 ist mit einem zweiten Planetengetriebe 19 verbunden. Das zweite Planetengetriebe 19 bildet am Abtrieb einen Anschluss für eine Armatur oder ein Ventil, die oder das mit dem Stellantrieb 14 angesteuert wird.

Die Basisplatte 2 der Vorrichtung 1 ist mit dem Hohlrad 20 des zweiten Planetengetriebes 19 drehfest verbunden. Das Hohlrad 20 ist am gegenüberliegenden Ende drehfest mit dem Gehäuse 21 des Stellantriebs 14 verbunden.

Entscheidend ist für die Drehmomentmessung, dass alle Komponenten, die mit den Biegezungen 4 verbunden sind, untereinander drehfest verbunden sind, aber ansonsten keine Verbindung zu einem anderen feststehenden Teil besitzen. Die Komponenten, die mit der Basisplatte verbunden sind, sind hingegen drehfest fixiert.

Wird der Elektromotor 15 angetrieben, entsteht bei einer solchen Anordnung ein Drehmoment zwischen dem ersten Planetengetriebe 17 und dem zweiten Planetengetriebe 19. Dieses Drehmoment bewirkt eine zur Drehrichtung des Getriebes im Wesentlichen tangentiale Auslenkung der Biegezungen 4. Diese Auslenkung wird von der Sensoreinheit 8 erfasst und kann in ein Drehmoment umgerechnet werden.

Das erfasste Drehmoment entspricht im Beispiel dem Drehmoment am Abtrieb des Stellantriebs 14, also an einer Armatur oder einem Ventil. Dadurch kann eine übermäßige Belastung der Armatur, des Ventils und/oder des Stellantriebs erkannt und verhindert werden. Darüber hinaus kann durch die genaue Messung des Drehmoments auch beispielsweise eine Endlage oder eine anderweitige Blockade oder ein Defekt der Armatur, des Ventils oder des Stellantriebs festgestellt werden.

### Bezugszeichenliste

- 1: Vorrichtung zum Bestimmen eines Drehmoments
- 2: Basisplatte
- 3: Öffnung
- 4: Biegezunge
- 5: Einschnitte
- 6: feststehendes Teil
- 7: Pfeil
- 8: Sensoreinheit
- 9: erstes Sensorelement
- 10: zweites Sensorelement
- 11: Federelement
- 12: Permanentmagnet
- 13: Hallsensor
- 14: Stellantrieb
- 15: Elektromotor
- 16: Rücklaufsperre
- 17: erstes Planetengetriebe
- 18: Hohlrad des ersten Planetengetriebes
- 19: zweites Planetengetriebe
- 20: Hohlrad des zweiten Planetengetriebes
- 21: Gehäuse des Stellantriebs
- 22: Gehäuse der Rücklaufsperre
- 23: Gehäuse des Elektromotors

## Patentansprüche

1. Verfahren zur Bestimmung eines Drehmoments eines Getriebes, insbesondere an einem Stellantrieb (14), wobei in einer Übertragungskette des Drehmoments ein elastisch verformbares Biegeelement (4) angeordnet ist, welches sich in Abhängigkeit von dem Drehmoment verformt wobei das Biegeelement als Zunge in einem plattenförmigen Träger ausgebildet ist, **dadurch gekennzeichnet, dass** ein Grad der Verformung der Zunge in der Plattenebene des Trägers durch eine Abstandsmessung mit einem Hallsensor (13) detektiert wird.

2. Verfahren nach Anspruch 1, **dadurch gekennzeichnet, dass** der Grad der Verformung durch Bestimmung einer Relativposition des Hallsensor zu einem magnetisch aktiven Gegenstück detektiert wird.

3. Verfahren nach Anspruch 2, **dadurch gekennzeichnet, dass** das magnetisch aktive Gegenstück ein Permanentmagnet ist.

4. Verfahren nach einem der Ansprüche 1 bis 3, **dadurch gekennzeichnet, dass** eine erste Getriebestufe an dem Träger und eine zweite Getriebestufe an dem Biegeelement befestigt ist.

5. Vorrichtung (1) zur Bestimmung eines Drehmoments eines Getriebes, insbesondere eines Stellantriebs (14), dass in einer Übertragungskette des Drehmoments ein elastisch verformbares Biegeelement angeordnet ist, welches sich in Abhängigkeit von dem Drehmoment verformt, **dadurch gekennzeichnet, dass** eine Sensoranordnung (8), mit welcher eine Verformung des Biegeelements detektierbar ist, eine als Ganzes montierbare bauliche Einheit bildet und dass die Sensoranordnung (8) einen Hallsensor als Sensor (13) und ein Magnet als Gegenstück (12) aufweist und dass die Vorrichtung (1) eine Basisplatte (2) aufweist, in der ein Biegeelement (4) als Zunge in der Plattenebene ausgebildet ist und die Auslenkung des Biegeelements (4) in der Plattenebene erfolgt.

6. Vorrichtung (1) nach Anspruch 5, **dadurch gekennzeichnet, dass** der Sensor (13) eine relative Lage von Sensor (13) und Gegenstück (12) zur Erfassung eines Grads der Verformung des Biegeelements (4), vorzugsweise berührungslos, erfasst.

7. Vorrichtung (1) nach einem der Ansprüche 5 oder 6,
**dadurch gekennzeichnet, dass** die Vorrichtung wenigstens zwei Biegeelemente (4) aufweist, die im Wesentlichen tangential zu einer Drehrichtung des Getriebes auslenkbar sind, wobei ein feststehendes Teil des Getriebes an den Biegeelementen befestigbar ist.

8. Vorrichtung (1) nach einem der Ansprüche 5 bis 7, **dadurch gekennzeichnet, dass** das Biegeelement oder die Biegeelemente (4) einseitig oder zweiseitig eingespannt sind.

9. Vorrichtung (1) nach einem der Ansprüche 5 bis 8, **dadurch gekennzeichnet, dass** die Basisplatte (2) eine, insbesondere kreisförmige, Aussparung (3) für eine Getriebewelle aufweist, und dass die Biegeelemente (4) gleichmäßig um die Aussparung (3) verteilt angeordnet sind.

10. Vorrichtung (1) nach einem der Ansprüche 5 bis 9, **dadurch gekennzeichnet, dass** die Bestimmung der Auslenkung auf kapazitiver, optischer, resistiver, piezoresistiver, piezoelektrischer oder magnetischer Wirkung beruht.

11. Vorrichtung (1) nach einem der Ansprüche 5 bis 10,
**dadurch gekennzeichnet, dass** die Vorrichtung (1) ein Mittel zur Berechnung eines Drehmoments aus der Auslenkung aufweist oder mit einem Mittel zur Berechnung eines Drehmoments aus der Auslenkung verbindbar ist.

12. Vorrichtung (1) nach einem der Ansprüche 8 bis 11,
**dadurch gekennzeichnet, dass** die Sensoranordnung (8) ein erstes Sensorelement (9) und ein zweites Sensorelement (10) aufweist, wobei das erste Sensorelement (9) mit einem Biegeelement (4) verbunden ist und das zweite Sensorelement (10) fixiert ist und wobei die Sensoreinheit (8) zur Bestimmung des Abstands zwischen dem ersten Sensorelement (9) und dem zweiten Sensorelement (10) ausgebildet ist.

13. Vorrichtung nach Anspruch 12, **dadurch gekennzeichnet,**
**dass** ein, insbesondere das erste, Sensorelement (9) einen Permanentmagnet (12) aufweist und das andere, insbesondere das zweite, Sensorelement (10) einen Hallsensor (13) aufweist.

14. Vorrichtung nach einem der Ansprüche 12 oder 13, **dadurch gekennzeichnet, dass** die beiden Sensorelemente (9, 10) durch ein Federelement (11) miteinander verbunden sind und/oder dass die beiden Sensorelemente (9, 10) ineinander linear verschieblich geführt sind, so dass sie eine Sensoreinheit bilden.

15. Vorrichtung nach einem der Ansprüche 12 bis 14, **dadurch gekennzeichnet, dass** die beiden Sensorelemente (9, 10) einteilig ausgebildet sind.

16. Stellantrieb (14) mit einem Planetengetriebe (17) und einer Vorrichtung (1) zur Bestimmung des Drehmoments nach einem der Ansprüche 5 bis 15, wobei das Hohlrad (18) des Planetengetriebes (17) mit den Biegeelementen (4) drehfest verbunden ist.

17. Stellantrieb (14) nach Anspruch 16 mit mehreren Getriebestufen aus Planetengetrieben, wobei die Vorrichtung (1) zur Bestimmung des Drehmoments zwischen einem ersten Planetengetriebe (17) und einem zweiten Planetengetriebe (19) angeordnet ist und das erste Planetengetriebe (17) mit den Biegeelementen (4) und das zweite Planetengetriebe (19) mit dem feststehenden Teil (6) der Vorrichtung (1) verbunden ist.

## Claims

1. Method for determining a torque of a gear mechanism, in particular on an actuator (14), wherein an elastically deformable bending element (4) is arranged in a torque transmission chain, which deforms as a function of the torque, wherein the bending element is formed as a tongue in a plate-shaped carrier, **characterized in that** a degree of deformation of the tongue in the plate plane of the carrier is detected by a distance measurement with a Hall sensor (13).

2. Method according to claim 1, **characterized in that** the degree of deformation is detected by determining a relative position of the Hall sensor with respect to a magnetically active counterpart.

3. Method according to claim 2, **characterized in that** the magnetically active counterpart is a permanent magnet.

4. Method according to one of claims 1 to 3, **characterized in that** a first gear stage is fastened to the carrier and a second gear stage is fastened to the bending element.

5. Device (1) for determining a torque of a gear mechanism, in particular of an actuator (14), in which an elastically deformable bending element is arranged in a torque transmission chain, which bending element deforms as a function of the torque, **characterized in that** a sensor arrangement (8), by means of which a deformation of the bending element can be detected, forms a structural unit that can be mounted as a whole, and **in that** the sensor arrangement (8) has a Hall sensor as sensor (13) and a magnet as counterpart (12) and **in that** the device (1) has a base plate (2) in which a bending element (4) is formed as a tongue in the plate plane and the deflection of the bending element (4) takes place in the plate plane.

6. Device (1) according to claim 5, **characterized in that** the sensor (13) detects a relative position of the sensor (13) and the counterpart (12) in order to detect a degree of deformation of the bending element (4), preferably in a contactless manner.

7. Device (1) according to one of claims 5 or 6, **characterized in that** the device has at least two bending elements (4) which can be deflected essentially tangentially to a direction of rotation of the gear mechanism, wherein a fixed part of the gear mechanism can be fastened to the bending elements.

8. Device (1) according to one of claims 5 to 7, **characterized in that** the bending element or the bending elements (4) are clamped on one or two sides.

9. Device (1) according to one of claims 5 to 8, **characterized in that** the base plate (2) has a, in particular circular, recess (3) for a gear shaft, and **in that** the bending elements (4) are arranged uniformly distributed around the recess (3).

10. Device (1) according to one of claims 5 to 9, **characterized in that** the determination of the deflection is based on capacitive, optical, resistive, piezoresistive, piezoelectric or magnetic action.

11. Device (1) according to one of claims 5 to 10, **characterized in that** the device (1) comprises a means for calculating a torque from the deflection or can be connected to a means for calculating a torque from the deflection.

12. Device (1) according to one of claims 8 to 11, **characterized in that** the sensor arrangement (8) comprises a first sensor element (9) and a second sensor element (10), wherein the first sensor element (9) is connected to a bending element (4) and the second sensor element (10) is fixed, and wherein the sensor unit (8) is designed to determine the distance between the first sensor element (9) and the second sensor element (10).

13. Device according to claim 12, **characterized in that** one, in particular the first, sensor element (9) has a permanent magnet (12) and the other, in particular the second, sensor element (10) has a Hall sensor (13).

14. Device according to one of claims 12 or 13, **characterized in that** the two sensor elements (9, 10) are connected to each other by a spring element (11), and/or **in that** the two sensor elements (9, 10) are guided in each other in a linearly displaceable manner, so that they form a sensor unit.

15. Device according to one of claims 12 to 14, **characterized in that** the two sensor elements (9, 10) are designed in one piece.

16. Actuator (14) having a planetary gear (17) and a device (1) for determining the torque according to one of claims 5 to 15, wherein the ring gear (18) of the planetary gear (17) is connected in a torsionally rigid manner to the bending elements (4).

17. Actuator (14) according to claim 16 having a plurality of gear stages consisting of planetary gears, wherein the device (1) for determining the torque is arranged between a first planetary gear (17) and a second planetary gear and the first planetary gear (17) is connected to the bending elements (4) and the second planetary gear (19) is connected to the fixed part (6) of the device (1).

## Revendications

1. Procédé pour la détermination d'un couple d'un engrenage, en particulier d'un servomoteur (14), dans lequel un élément flexible (4) déformable de façon élastique, qui se déforme en fonction du couple, est disposé dans une chaîne de transmission du couple, lequel élément flexible est conformé comme une languette dans un support en forme de plaque, **caractérisé en ce qu'**un degré de déformation de la languette dans le plan de la plaque du support est détecté par une mesure de la distance à l'aide d'un capteur à effet Hall (13).

2. Procédé selon la revendication 1, **caractérisé en ce que** le degré de déformation est détecté par détermination d'une position relative du capteur à effet Hall par rapport à une pièce opposée ayant une activité magnétique.

3. Procédé selon la revendication 2, **caractérisé en ce que** la pièce opposée ayant une activité magnétique est un aimant permanent.

4. Procédé selon l'une des revendications 1 à 3, **caractérisé en ce qu'**un premier étage de l'engrenage est fixé sur le support et un deuxième étage de l'engrenage sur l'élément flexible.

5. Dispositif (1) pour la détermination d'un couple d'un engrenage, en particulier d'un servomoteur (14), dans lequel un élément flexible déformable de façon élastique, qui se déforme en fonction du couple, est disposé dans une chaîne de transmission du couple, **caractérisé en ce qu'**une disposition de capteur (8) avec laquelle une déformation de l'élément flexible peut être détectée forme une unité de construction qui peut être montée comme un tout et **en ce que** la disposition de capteur (8) comporte un capteur à effet Hall servant de capteur (13) et un aimant servant de pièce opposée (12) et **en ce que** le dispositif (1) comporte une plaque de base (2) dans laquelle un élément flexible (4) est formé comme une languette dans le plan de la plaque et l'élément flexible (4) est dévié dans le plan de la plaque.

6. Dispositif (1) selon la revendication 5, **caractérisé en ce que** le capteur (13) détecte une position relative du capteur (13) et de la pièce opposée (12) pour détecter un degré de déformation de l'élément flexible (4), de préférence sans contact.

7. Dispositif (1) selon l'une des revendications 5 ou 6, **caractérisé en ce qu'**il comporte au moins deux éléments flexibles (4) qui peuvent être déviés de façon sensiblement tangente par rapport à un sens de rotation de l'engrenage, une partie fixe de l'engrenage pouvant être fixée aux éléments flexibles.

8. Dispositif (1) selon l'une des revendications 5 à 7, **caractérisé en ce que** l'élément flexible ou les éléments flexibles (4) sont serrés sur un côté ou deux côtés.

9. Dispositif (1) selon l'une des revendications 5 à 8, **caractérisé en ce que** la plaque de base (2) comporte une découpe (3), en particulier circulaire, pour un axe d'engrenage, et **en ce que** les éléments flexibles (4) sont répartis régulièrement autour de la découpe (3).

10. Dispositif (1) selon l'une des revendications 5 à 9, **caractérisé en ce que** la détermination de la déviation se fonde sur un effet capacitif, optique, résistif, piézorésistif, piézoélectrique ou magnétique.

11. Dispositif (1) selon l'une des revendications 5 à 10, **caractérisé en ce que** le dispositif (1) comporte un moyen pour calculer un couple à partir de la déviation ou peut être connecté à un moyen pour calculer un couple à partir de la déviation.

12. Dispositif (1) selon l'une des revendications 8 à 11, **caractérisé en ce que** la disposition de capteur (8) comporte un premier élément de capteur (9) et un deuxième élément de capteur (10), le premier élément de capteur (9) étant relié à un élément flexible (4) et le deuxième élément de capteur (10) étant fixé, et dans lequel l'unité de capteur (8) est conçue pour déterminer la distance entre le premier élément de capteur (9) et le deuxième élément de capteur (10).

13. Dispositif selon la revendication 12, **caractérisé en ce qu'**un élément de capteur, en particulier le premier élément de capteur (9), comporte un aimant permanent (12) et l'autre, en particulier le deuxième élément de capteur (10), comporte un capteur à effet Hall (13).

14. Dispositif selon l'une des revendications 12 ou 13, **caractérisé en ce que** les deux éléments de capteur (9, 10) sont reliés entre eux par un élément de ressort (11) et/ou **en ce que** les deux éléments de capteur (9, 10) sont guidés l'un dans l'autre en translation linéaire, de sorte qu'ils forment une unité de capteur.

15. Dispositif selon l'une des revendications 12 à 14, **caractérisé en ce que** les deux éléments de capteur (9, 10) sont formés d'une seule pièce.

16. Servomoteur (14) avec un engrenage à train planétaire (17) et un dispositif (1) pour déterminer le couple selon l'une des revendications 5 à 15, dans lequel la roue creuse (18) de l'engrenage à train planétaire (17) est reliée aux éléments flexibles (4) de manière fixe en rotation.

17. Servomoteur (14) selon la revendication 16 avec plusieurs étages d'engrenage composés d'engrenages à train planétaire, dans lequel le dispositif (1) pour déterminer le couple est disposé entre un premier engrenage à train planétaire (17) et un deuxième engrenage à train planétaire (19) et le premier engrenage à train planétaire (17) est relié aux éléments flexibles (4) et le deuxième engrenage à train planétaire (19) à la partie fixe (6) du dispositif (1).
